# EUROPEAN PATENT APPLICATION

(11) **EP 2 555 127 A2**
(43) Date of publication of application: **06.02.2013**
(21) Application number: 12169623.1
(22) Date of filing: 25.05.2012
(51) Int. Cl.: G06F 17/28, H04L 12/58, G06Q 10/10

(54) **Display apparatus for translating conversations**

(30) Priority: 03.08.2011 KR 20110077479
(71) Applicant: Samsung Electronics Co., Ltd., Suwon-si, Gyeonggi-do, 443-742 (KR)
(72) Inventor: Cha, Tae-hwan, Gyeonggi-do (KR); Chae, Ju-rack, Gyeonggi-do (KR); Kim, Jae-cheol, Gyeonggi-do (KR); Kim, Jae-hwan, Gyeonggi-do (KR); Bak, Eun-sang, Gyeonggi-do (KR)
(74) Representative: Hewett, Jonathan Michael Richard

(57) **Abstract**

A display apparatus, a method of controlling the same, and a server thereof are provided, in which the display apparatus includes: a communication unit which communicates with a terminal via a conversation mode; a video processor which processes an image related to the conversation mode; a display unit which displays the image processed by the video processor; and a controller which controls the display unit to display a conversation graphical user interface (GUI) comprising a translation selection item and a conversation window for having a conversation with a user of the terminal if the conversation mode is selected, and provides a result from a translation of the conversation if the translation selection item is selected.

## Description

The present invention relates to a display apparatus, a control method and a server thereof, and more particularly, to a display apparatus having a conversation mode of conversing with a user of a terminal, a method of controlling the same, and a server thereof.

A television (TV), a personal computer (PC), a cellular phone, a smart phone, a smart pad, or the like display apparatus may provide a conversation mode so that a user can have a conversation with a user of a terminal (hereinafter, referred to as "the other party," or "the terminal," etc.) through video, voice, text, etc.

With the development of computer networks, there have been many cases where a first party attempts to have a conversation with another party who uses a different language than the first party. In such cases, the conversation is less than ideal due to the parties' limited ability to communicate. Thus, better solutions are desirable.

According to an aspect of the present invention there is provided a display apparatus including a communication unit which communicates with a terminal via a conversation mode, a video processor which processes an image related to the conversation mode, a display unit which displays the image processed by the video processor, and a controller which controls the display unit to display a conversation graphical user interface (GUI) comprising a translation selection item and a conversation window for having a conversation with a user of the terminal if the conversation mode is selected, and provides a result from a translation of the conversation if the translation selection item is selected.

The conversation GUI may further include a setting item for changing settings for the translation, wherein the controller changes the settings for the translation in accordance with an input received through the setting item, and provides the result from the translation of the conversation in accordance with the settings of the translation.

The settings for the translation may include settings for improving an accuracy of the translation.

The settings for improving the accuracy of the translation may include settings for at least one of a language, a situation and a topic of the conversation.

The controller may change the settings for the translation with respect to each user of a plurality of other terminals, and provide results from translating conversations with the users of the plurality of other terminals in accordance with the settings for the translation.

The conversation GUI may include a plurality of conversation windows corresponding to each of the plurality of other terminals, wherein the controller controls the results from the translating of the conversations to respectively correspond to each of the plurality of conversation windows.

The controller may receive the result from the translation of the conversation from an external server and controls the display apparatus to output the received result.

The conversation GUI may further include a setting item for selecting settings for the translation, wherein the controller changes the settings for the translation in accordance with an input received through the setting item, and transmits the settings to the external server.

The controller may receive user identifiers from an external server, and provide translation results in accordance with the received user identifiers.

According to an aspect of the present invention there is provided a method of controlling a display apparatus, the method including: selecting a conversation mode to have a conversation with a user of a terminal; displaying a conversation graphical user interface (GUI) comprising a translation selection item and a conversation window for having the conversation with the user of the terminal; and providing a result from a translation of the conversation if the translation selection item is selected.

The conversation GUI may further include a setting item for changing settings for the translation, wherein the method further comprises changing the settings for the translation in accordance with an input received through the setting item, and wherein the providing the result from the translation of the conversation comprises providing a result from a translation of the conversation in accordance with the settings of the translation.

The settings for the translation may include settings for improving an accuracy of the translation.

The settings for improving the accuracy of the translation may include settings for at least one of a language, a situation and a topic of the conversation.

The changing of the settings may include changing settings for the translation with respect to each user of a plurality of other terminals, and wherein the providing of the result from the translation of the conversation comprises providing results from translating conversations with users of the plurality of other terminals in accordance with the settings of the translation.

The conversation GUI may include a plurality of conversation windows corresponding to the plurality of other terminals, wherein the providing the result from the translation of the conversation comprises providing the results from the translating of the conversations to correspond respectively to the plurality of conversation windows.

The method may further include receiving the result from the translating conversations from an external server, wherein the providing the result from the translation of the conversation comprises providing the received translation result.

The conversation GUI may further include a setting item for the translation, and wherein the method further include: changing settings for the translation in accordance with an input received through the setting item; and transmitting the settings for the translation to the external server.

The method may further include receiving user identifiers from the external server, wherein the providing the result from the translation of of the conversation comprises providing translation results in accordance with the received user identifiers.

According to an aspect of the present invention there is provided a server capable of communicating with a display apparatus, the server including: a communication unit which communicates with the display apparatus via a conversation mode to have a conversation with a user of a terminal; and a controller which receives settings for a translation and a request for a translation of the conversation based on the conversation mode from the display apparatus, generates a translation result from the translation of the conversation in accordance with the received settings, and transmitting the generated translation result to the display apparatus.

The settings for the translation may include settings for improving an accuracy of the translation.

The settings for improving the accuracy of the translation may include settings for at least one of a language, a situation and a topic of the conversation.

The controller may further transmit a plurality of user identifiers for distinguishing the translation results as respectively corresponding to a plurality of users.

According to an aspect of the present invention there is provided a method of controlling a display apparatus, the method including: selecting a conversation mode to have a conversation between a first user and a second user; displaying a graphical user interface (GUI) including a translation selection item for performing a translation, and a conversation window for displaying an image corresponding to a feature of at least one of the first user and the second user; receiving an input selecting the translation selection item; and outputting a result from a translation of at least part of the conversation between the first user and the second user.

The conversation window may output information corresponding to the conversation between the first user and the second user.

The outputting of the information corresponding to the conversation between the first user and the second user may include displaying text corresponding to the conversation between the first user and the second user.

The above and/or other aspects will become apparent and more readily appreciated from the following description of the exemplary embodiments, taken in conjunction with the accompanying drawings, in which:
FIG. 1 is a block diagram showing a configuration of a display apparatus according to an exemplary embodiment;
FIG. 2 is a flowchart showing operations of a display apparatus, an example of which is the display apparatus shown in FIG. 1;
FIG. 3 shows a conversation graphical user interface (GUI) according to an exemplary embodiment;
FIGS. 4 to 7 illustrate a translation setting menu according an exemplary embodiment;
FIG. 8 is a flowchart showing detailed operations of a display apparatus, an example of which is the display apparatus shown in FIG. 1;
FIG. 9 is a conversation GUI according to another exemplary embodiment;
FIGS. 10 and 11 illustrate a translation setting menu according another exemplary embodiment;
FIG. 12 is a flowchart showing another example of the detailed operations of a display apparatus, an example of which is the display apparatus shown in FIG. 1;
FIG. 13 is a block diagram showing a display apparatus according to another exemplary embodiment; and
FIG. 14 is a flowchart showing operations of a display apparatus, an example of which is the display apparatus shown in FIG. 13.

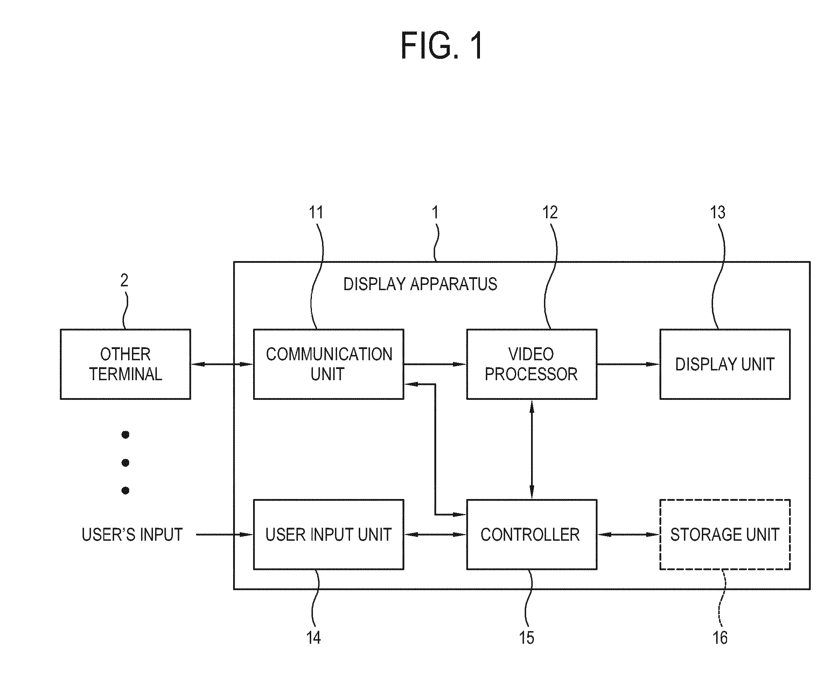

Below, exemplary embodiments of the present invention will be described in detail with reference to accompanying drawings. FIG. 1 is a block diagram showing a configuration of a display apparatus 1 according to an exemplary embodiment. The display apparatus 1 communicates with another party's terminal 2 during a conversation mode. In this exemplary embodiment, the conversation mode enables a user of the display apparatus 1 to have a conversation with a user of the other party located at terminal 2 (hereinafter, referred to as "the other party" or "the terminal," etc.). The conversation in this exemplary embodiment includes any means for making communications possible between a user of the display apparatus 1 and the other party, for example, a video conversation, a voice conversation, a text conversation, etc.

The communication between the display apparatus 1 and terminal 2 includes any communication making the conversation mode possible, for example, a wired communication, a wireless communication, a network communication, etc. In this exemplary embodiment, a network is sufficient as long as it is capable of enabling the conversation mode, and there is no limit to the network. For example, the network may include the Internet, or the like.

A user of the display apparatus 1 may have a conversation with a user of terminal 2, or may have a conversation with users of two or more other terminals 2.

In light of the conversation mode, the display apparatus 1 provides a mode of translating a conversation between a user and the other party. In this exemplary embodiment, a user of the display apparatus 1 may use a result (hereinafter, referred to as a "translation result") from translating the conversation between him/her and the other party.

Referring back to FIG. 1, the display apparatus 1 includes a communication unit 11, a video processor 12, a display unit 13, a user input unit 14 and a controller 15. The term "unit" as used herein means a hardware component, such as a processor or circuit, and/or a software component that is executed by a hardware component such as a processor.

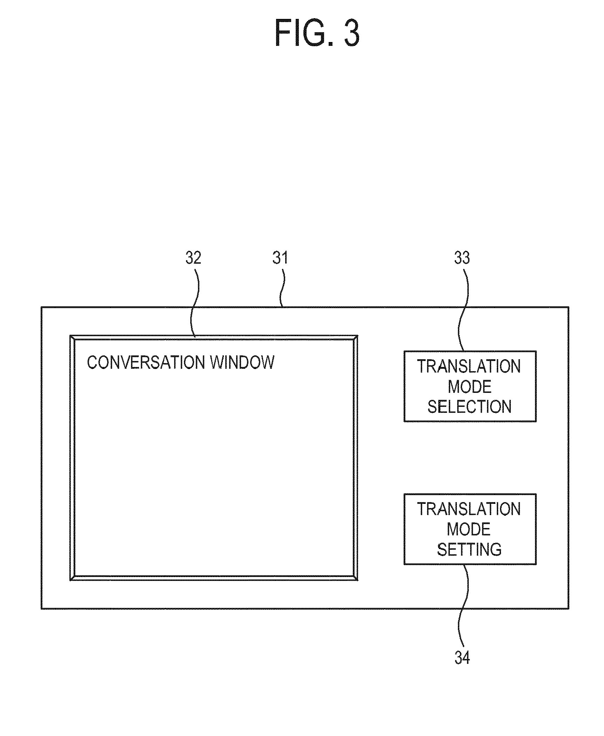

The communication unit 11 communicates with the other terminal 2 during the conversation mode. The video processor 12 processes an image related to the conversation mode. The image related to the conversation mode is processed by the video processor 12, and includes a conversation GUI 31, as shown in FIG. 3. The display unit 13 displays an image processed by the video processor 12. The user input unit 14 receives a user's instruction. The user input unit 14 may receive a user's input such as a text, a gesture, etc., during the conversation mode. In the conversation mode, the controller 15 controls to provide the result from translating a conversation between a user and the other party.

Although not shown, the display apparatus 1 may further include at least one of a voice input unit for inputting a user's voice, a voice output unit for outputting the other party's voice, and a voice processor for processing a voice of a user and/or the other party.

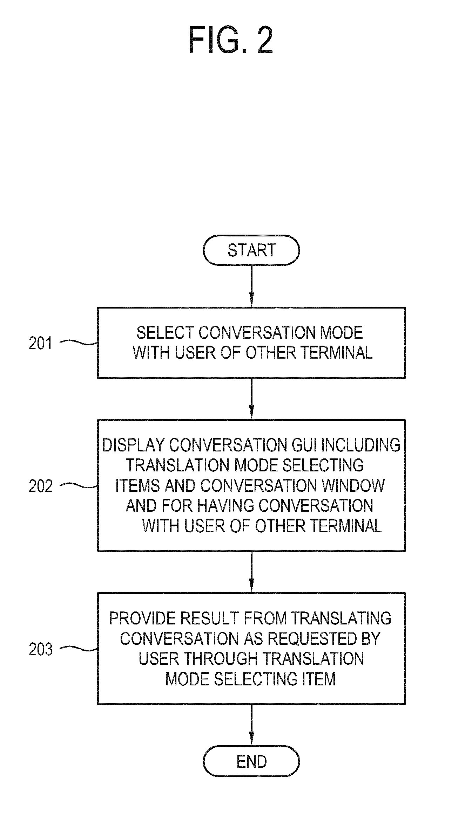

FIG. 2 is a flowchart showing operations of the display apparatus shown in FIG. 1. The operations 201 to 203 shown in FIG. 2 may be implemented under control of the controller 15. At operation 201, the mode to have a conversation with a user of the other terminal 2 is selected by receiving instructions from a user of the display apparatus 1.

Next, at operation 202, the display apparatus 1 displays the conversation GUI 31 for the conversation mode on the display unit 13.

FIG. 3 shows a conversation GUI 31 according to an exemplary embodiment. In this exemplary embodiment, the conversation GUI 31 includes a conversation window 32 for having a conversation with a user of the other terminal 12. The conversation window 32 may display an image (not shown) corresponding to features of a user and/or the other party. Also, the conversation window 32 may display a text (not shown) corresponding to the conversation of a user and/or the other party.

The conversation GUI 31 in this exemplary embodiment may further include a translation selection item 33 for allowing a user to select the translation. A user of the display apparatus 1 may select the translation selection item 33 to use the translation of the display apparatus 1 if a language or the like causes difficulty in communicating with the other party during the conversation mode.

Referring again to FIG. 2, at operation 203, if a user selects the translation selection item 33, the display apparatus 1 provides a translation result of a conversation between a user and the other party. In this exemplary embodiment, translation includes translation of languages used in the conversation between a user and the other party. Specifically, translation includes translation for a user of the display apparatus 1 and/or translation for the other party of the other terminal 2. In this exemplary embodiment, the translation result include any means through which a user of the display apparatus 1 and/or a user of the other terminal 2 can understand the conversation. For example, the translation result may include a voice, a text, etc. In this exemplary embodiment, the translation result of the conversation with the other party may be output as a voice through the voice outputting unit (not shown) or the like, or the text through the conversation window 32. Further, the translation result of the conversation with a user may be transmitted to the other terminal 2 in the form of voice and/or text information.

In light of providing the translation, the display apparatus 1 allows a user to setup the translation. For example, the setting about the translation may include a setting for improving accuracy or reliability of the translation. Referring to FIG. 3, the conversation GUI 31 may further include an item 34 for the translation setting. A user may select the item 34 for setting the translation during the conversation.

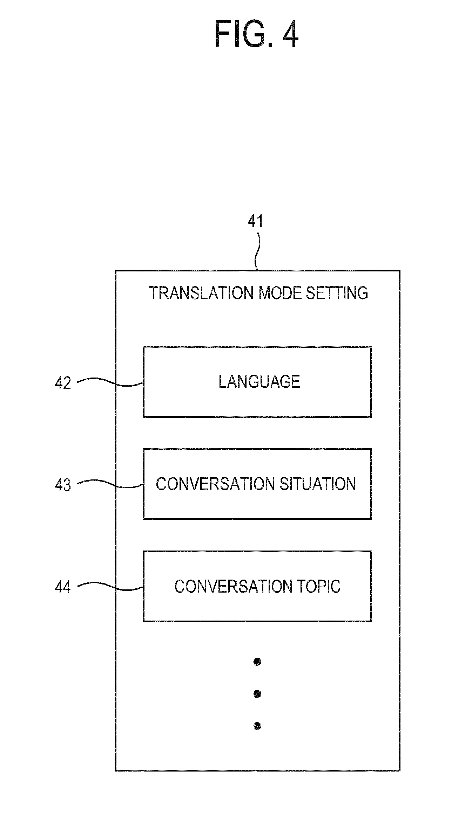

In this exemplary embodiment, the settings for improving the accuracy of the translation may include at least one of a conversation language, a conversation situation and a conversation topic. FIGs. 4 to 7 illustrate a translation setting menu according an exemplary embodiment. Referring to FIG. 4, the display apparatus 1 may display a translation setting menu 41 when the item 34 for setting the translation is selected. The translation setting menu 41 may include items 42 to 44 corresponding to at least one of the conversation language, the conversation situation and the conversation topic. Thus, a user may set up the translation in detail by selecting at least one needed for the setting among the items 42 to 44 in consideration of the current conversation.

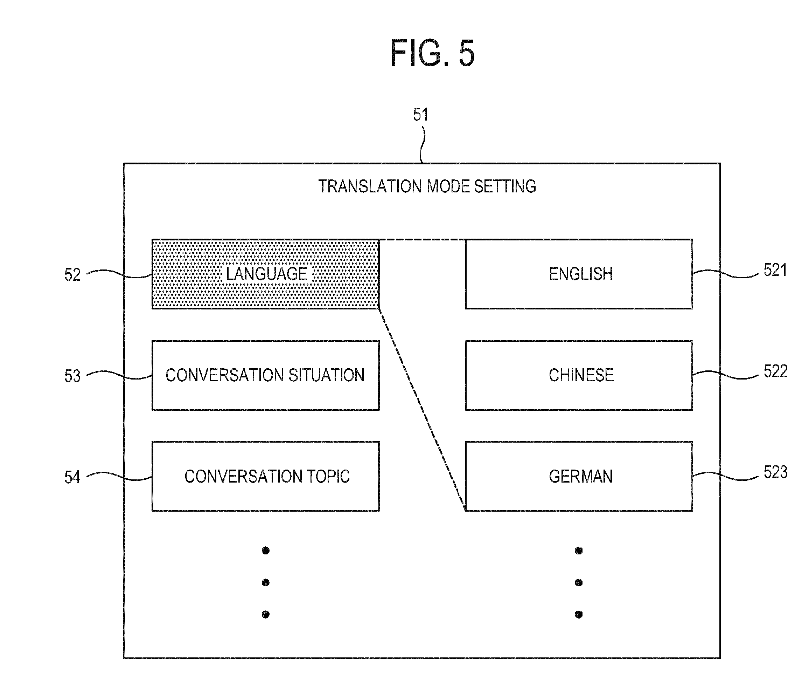

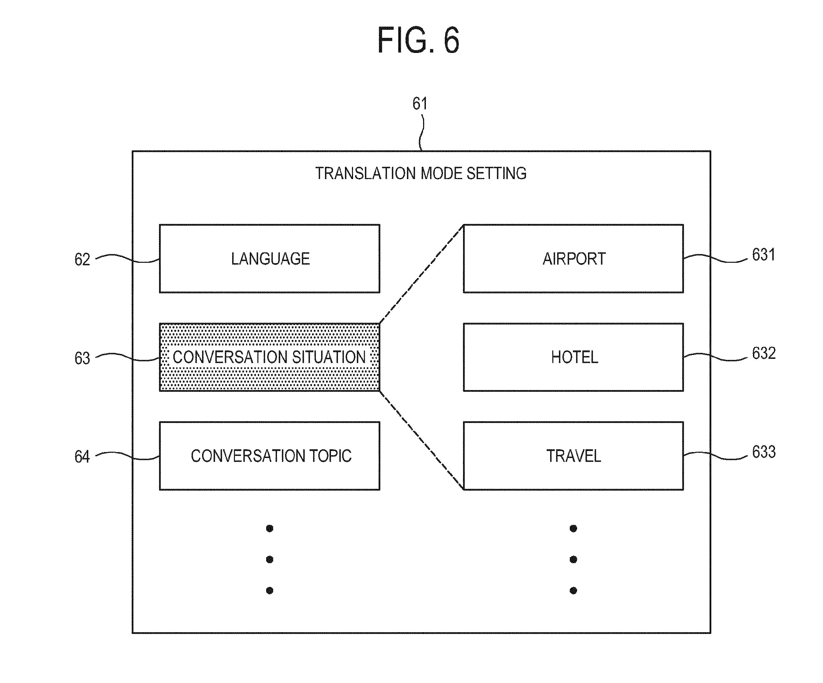

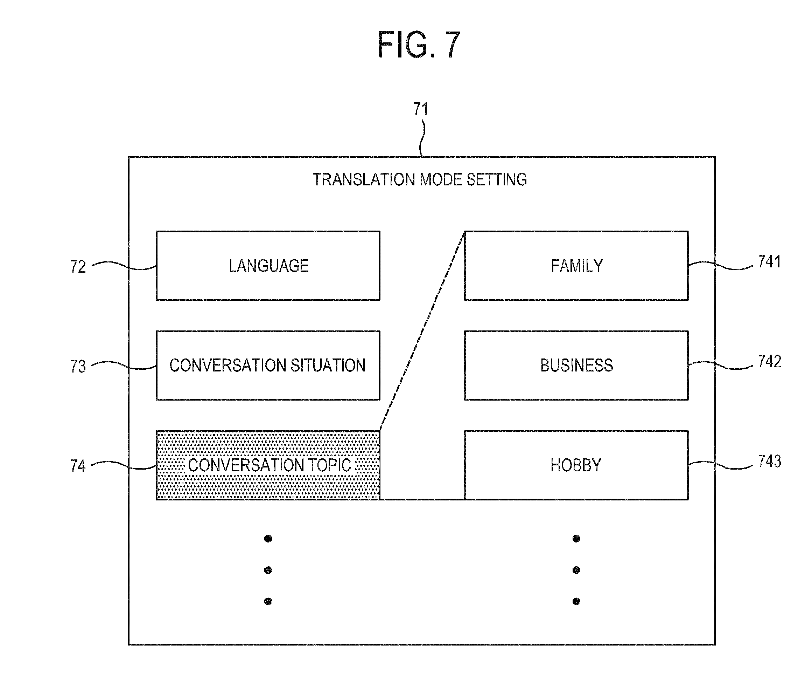

Referring to FIGs. 5 to 7, if one of the items 42 to 44 for setting the translation is selected, the display apparatus 1 may display a specific translation setting menu 51 to 71 corresponding to the selected item. For instance, referring to FIG. 5, items 521 to 523 corresponding to "English," "Chinese," "German," etc. are displayed when a "language" item 52 is selected. Referring to FIG. 6, items 631 to 633 corresponding to "airport," "hotel," "travel," etc. are displayed when a "conversation situation" item 63 is selected. Referring to FIG. 7, items 741 to 743 corresponding to "family," "business," "hobby," etc. are displayed when a "conversation topic" item is selected. Thus, a user selects at least one related to a current conversation among the items 521 to 523, 631 to 633 and 741 to 743, and thus carries out more specific settings about the translation.

The display apparatus 1 provides a translation result based on the settings about a user's translation. Referring to FIG. 1, the display apparatus 1 may further include a storage unit 16 to store translation information classified into categories such as the language, situation, topic, etc. as information to be referred when translating the conversation. While performing the translation, the display apparatus 1 provides the translation result based on the translation information of the category set up by a user, thereby improving the accuracy of the translation.

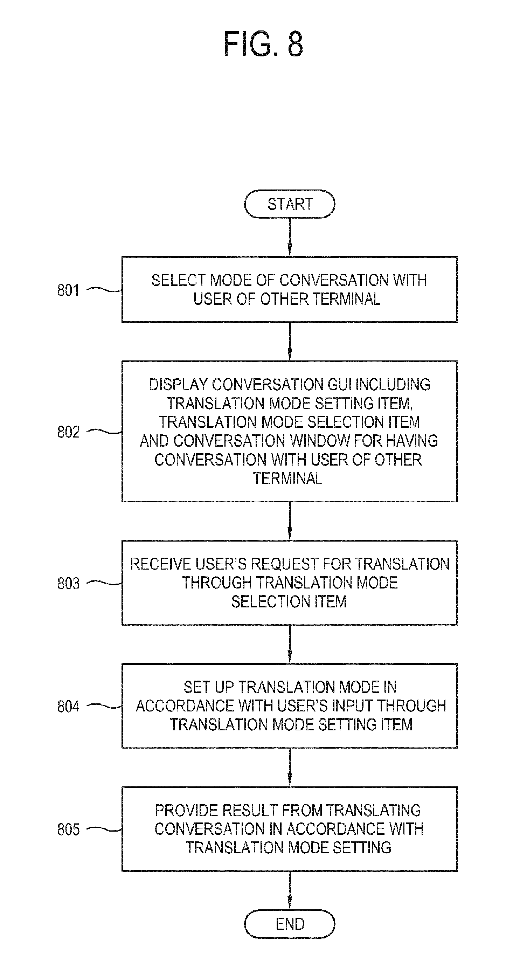

FIG. 8 is a flowchart showing detailed operations of the display apparatus shown in FIG. 1. At operation 801, the conversation mode with the user of the other terminal 2 is selected in accordance with a user's instructions. Next, at operation 802, the display apparatus 1 displays the conversation GUI 31 including the conversation window 32, the conversation mode selection item 33 and the translation setting item 34 on the display unit 13. At operation 803, the display apparatus 1 receives a user's request for the translation through the translation selection item 33. At operation 804, the display apparatus 1 sets up the translation in accordance with a user's input through the translation setting item 34. At operation 805, the display apparatus 1 provides a result from translating the conversation in accordance with a user's translation settings.

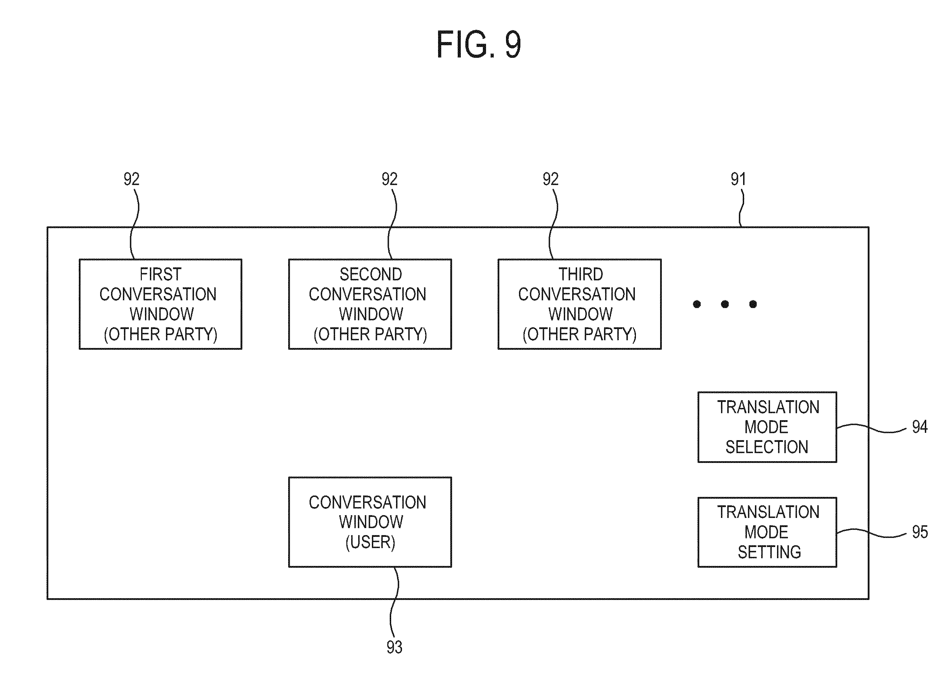

FIG. 9 is a conversation GUI91 according to another exemplary embodiment. In this exemplary embodiment, the conversation GUI 91 includes a plurality of conversation windows 92 for a conversation with users with a plurality of other terminals 12. The plurality of conversation windows 92 may display images (not shown) corresponding to the other parties, respectively. The conversation GUI 91 may further include a conversation window 93 where the features of a user of the display apparatus 1 are displayed. The conversation windows 92 and 93 may display a text (not shown) corresponding to a conversation of a user and/or the other parties. The conversation GUI 91 may further includes an item 94 for allowing a user to select the translation and an item 95 for allowing a user to set up the translation.

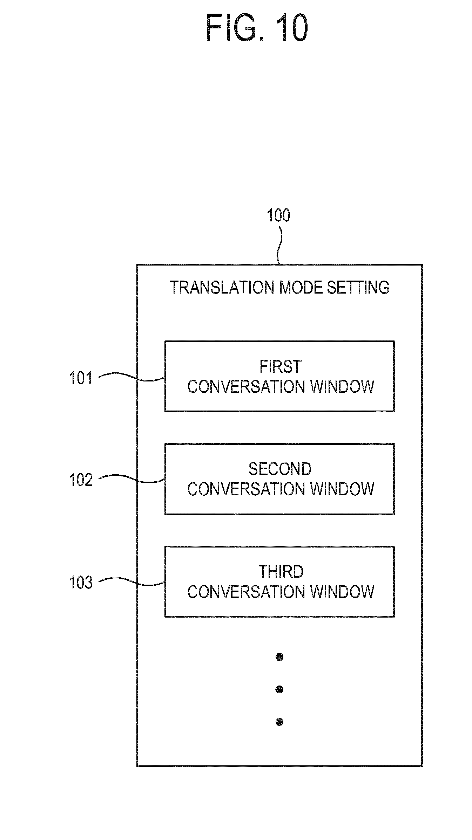

The display apparatus 1 allows a user to set up the translation with respect to each of the other parties, and provides translation results corresponding to the respective conversations with the plurality of other terminals in accordance with the settings. FIG. 10 illustrates a translation setting menu 100 for settings about each translation for the plurality of other parties. The translation setting menu 100 may include items 101 to 103 represented by a "first conversation window," a "second conversation window," and a "third conversation window" corresponding to the plurality of other parties, respectively. A user selects at least one needed for the settings of the translation among the items 101 to 103 corresponding to the plurality of other parties, so that the translation for a certain other party can be set up in detail.

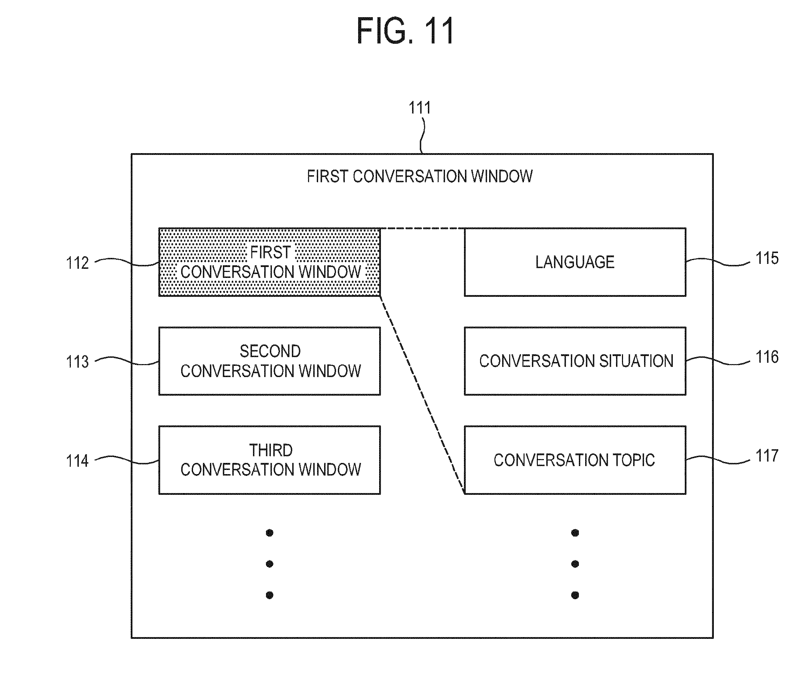

FIG. 11 illustrates a translation setting menu 1111 for settings related to an improvement in accurate translation according to another exemplary embodiment. The display apparatus 1 may display a detailed translation setting menu 111 if one among the items 101 to 103 corresponding to the plurality of other parties is selected for the settings related to the translation. For example, the translation setting menu 111 may include items 115 to 117 corresponding to at least one of the language, situation and topic of the conversation with regard to each of the plurality of other parties 112 to 114. A user selects at least one needed for the settings of the translation among the items 115 to 117 in consideration of the other party and the current conversation, so that the translation can be set up in detail.

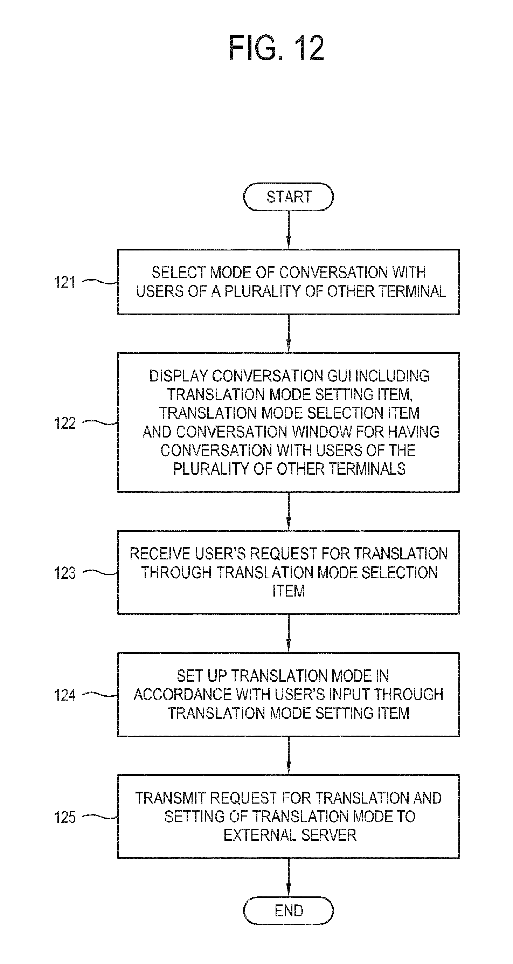

FIG. 12 is a flowchart showing another example of the detailed operations of the display apparatus 1 shown in FIG. 1. At operation 121, the mode to have a conversation with users of a plurality of other terminals 2 is selected in accordance with instructions of a user of the display apparatus 1. Next, at operation 122, the display apparatus 1 displays the conversation GUI 91 including the translation setting item 95, the translation selection item 94, and the conversation windows 92 and 93 for having a conversation with users of the plurality of other terminals. At operation 123, the display apparatus 1 receives a user's request for the translation through the translation selection item 94. At operation 124, the display apparatus 1 sets up the translation for each of the plurality of other parties in accordance with user's input using the translation setting item 95. At operation 125, the display apparatus 1 provides a result from translating the conversation with the plurality of other parties in accordance with a user's translation setting.

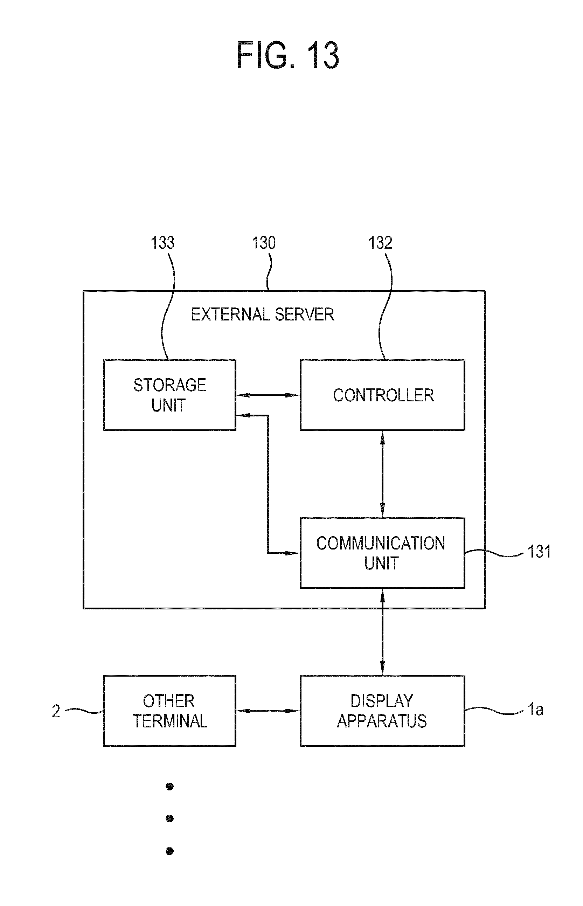

FIG. 13 is a block diagram showing a display apparatus 1a according to another exemplary embodiment. In this exemplary embodiment, repetitive descriptions of the same or similar matters to those of the display apparatus 1 of FIG. 1 will be avoided. In light of the translation, the display apparatus 1a receives a translation result of a conversation from an external server 130, and provides it to a user. For example, the external server 130 may be achieved by an Internet, a server or the like. As shown in FIG. 13, the external server 130 may include a communication unit 131 to communicate with the display apparatus 1a, a controller 132 to perform control for providing the translation result to the display apparatus 1a, and a storage unit 133 to store translation information to be referred for providing the translation result.

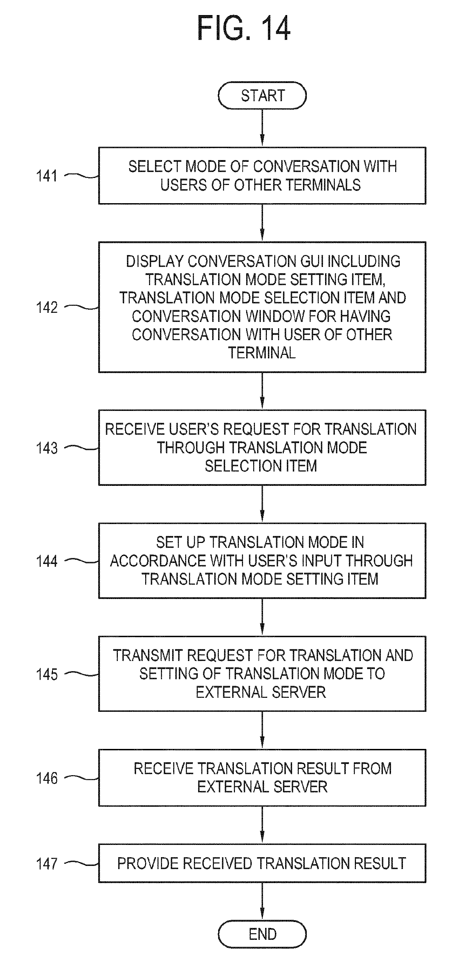

FIG. 14 is a flowchart showing operations of the display apparatus 1a shown in FIG. 13. At operation 141, the mode to have a conversation with a user of the other terminal 2 is selected in accordance with instructions of a user of the display apparatus 1a. At operation 142, the display apparatus 1a displays the conversation GUI 31 including the translation setting item 34, the translation selection item 33, and the conversation window 32 for having a conversation mode. At operation 143, the display apparatus 1a receives a user's request for translation through the translation selection item 33. At operation 144, the display apparatus 1a sets up the translation in accordance with user's input through the translation setting item 34. At operation 145, the display apparatus 1a transmits a request for translating the conversation and a user's settings of the translation to the external server. Then, the external server 130 translates the conversation based on the user's settings for the translation received from the display apparatus 1a, and generates a translation result. At operation 146, the external server 130 translates the generated translation result to the display apparatus 1a, and the display apparatus 1a receives the translation result from the external server 130. At operation 147, the display apparatus 1a provides the received translation result to a user.

The display apparatus 1a may transmit the settings for the translation corresponding to a plurality of users to the external server 130 if having a conversation with users of the plurality of other terminals 2. In this case, the external server 130 may transmit user identifiers to the display apparatus 1a so as to distinguish the translation results corresponding to the plurality of users. Thus, the display apparatus 1a may distinguish a plurality of users in accordance with the received user identifiers, and provide the corresponding translation results.

As described above, a conversation with the other party who uses a different language can be more smoothly and conveniently carried out in using a conversation mode.

Although a few exemplary embodiments have been shown and described, it will be appreciated by those skilled in the art that changes may be made in these exemplary embodiments without departing from the present invention.

## Claims

1. A display apparatus comprising:
a communication unit arranged to communicate with another party terminal having a conversation function;
a video processor arranged to process an image related to the conversation function to be displayed;
a display unit arranged to display the image processed by the video processor; and
a controller arranged to control the display unit to display a conversation graphical user interface (GUI) comprising a translation function selection item and a conversation window for having a conversation with a user of the other party terminal if the conversation function is selected by a user, and to provide a result from translating the conversation if a user makes a request for translation through the translation function selection item.

2. The display apparatus according to claim 1, wherein the conversation GUI further comprises a setting item for the translation function, and
the controller is arranged to perform the settings for the translation function in accordance with an input received through the setting item, and to provide the result from translating the conversation in accordance with the settings.

3. The display apparatus according to claim 2, wherein the settings for the translation function comprise settings for an improvement in accuracy of the translation.

4. The display apparatus according to claim 3, wherein the settings for the improvement in the accuracy of the translation comprise settings for at least one of a language, a situation and a topic of the conversation.

5. The display apparatus according to claim 2, wherein the controller is arranged to perform the settings for the translation function with respect to each user of a plurality of other party terminals, and to provide results from translating conversations with the users of the plurality of other party terminals in accordance with the settings.

6. The display apparatus according to claim 5, wherein the conversation GUI comprises a plurality of conversation windows corresponding to the plurality of other party terminals, and
the controller is arranged to control the translation results to correspond to the plurality of conversation windows, respectively.

7. The display apparatus according to claim 1, wherein the controller is arranged to receive the translation result from an external server and provides the received translation result.

8. The display apparatus according to claim 7, wherein the conversation GUI further comprises a setting item for the translation function, and
the controller is arranged to perform the settings for the translation function in accordance with an input through the setting item, and to transmit the settings to the external server.

9. A method of controlling a display apparatus, the method comprising:
selecting a function to have a conversation with a user of another party terminals;
displaying a conversation graphical user interface (GUI) comprising a translation function selection item and a conversation window for having a conversation with the user of the other party terminal; and
providing a result from translating the conversation if the translation function selection item is selected.

10. The method according to claim 9, wherein the conversation GUI further comprises a setting item for the translation function,
the method further comprises performing the settings for the translation function in accordance with an input through the setting item, and
the providing the result from the translating of the conversation comprises providing a result from translating the conversation in accordance with the settings.

11. The method according to claim 10, wherein the settings for the translation function comprise settings for an improvement in accuracy of the translation.

12. The method according to claim 11, wherein the settings for the improvement in the accuracy of the translation comprise settings for at least one of a language, a situation and a topic of the conversation.

13. The method according to claim 10, wherein the performing the settings comprises performing the settings for the translation function with respect to each user of a plurality of other party terminals, and
the providing the result from the translating the conversation comprises providing results from translating conversations with users of the plurality of other party terminals in accordance with the settings.

14. The method according to claim 13, wherein the conversation GUI comprises a plurality of conversation windows corresponding to the plurality of other party terminals, and
the providing the result from the translating the conversation comprises providing the translation results to correspond to the plurality of conversation windows, respectively.

15. The method according to claim 10, further comprising receiving the translation result from an external server, and
the providing the result from the translating the conversation comprises providing the received translation result.
